# EUROPEAN PATENT APPLICATION

(11) **EP 4 831 933 A1**
(43) Date of publication of application: **28.10.2026**
(21) Application number: 24909986.2
(22) Date of filing: 09.09.2024
(51) Int. Cl.: G06V 10/764, G06V 10/40

(54) **ABNORMALITY RECOGNITION METHOD AND APPARATUS, AND STORAGE MEDIUM, ELECTRONIC DEVICE AND PROGRAM PRODUCT**

(30) Priority: 26.12.2023 CN 202311820905
(71) Applicant: Tencent Technology (Shenzhen) Company Limited, Shenzhen, Guangdong 518057 (CN)
(72) Inventor: LIU, Jiaqi, Shenzhen, Guangdong 518057 (CN); WU, Kai, Shenzhen, Guangdong 518057 (CN); NIE, Qiang, Shenzhen, Guangdong 518057 (CN); LIU, Yong, Shenzhen, Guangdong 518057 (CN); WANG, Chengjie, Shenzhen, Guangdong 518057 (CN)
(74) Representative: EP&C
(86) International application number: PCT/CN2024/117645
(87) International publication number: WO 2025/139040

(57) **Abstract**

Disclosed in the present application are an abnormality recognition method and apparatus, and a storage medium and an electronic device. The method comprises: acquiring a first image to be subjected to recognition; performing first-stage feature extraction on the first image to obtain at least one basic visual feature; determining, from among at least one standard visual feature, a first visual feature having a feature similarity to the basic visual feature that is greater than or equal to a preset threshold value; acquiring target guidance information matching the first visual feature; by means of the target guidance information, performing second-stage feature extraction on the first image to obtain at least one second visual feature related to a target object type; when a standard visual feature of a second image is acquired, comparing the at least one second visual feature with the standard visual feature of the second image to obtain a comparison result; and by means of the comparison result, determining an abnormality recognition result for the first image. The present application solves the technical problem of the abnormality recognition efficiency being low.

## Description

This application claims priority to Chinese Patent Application No. 2023118209059, entitled "ABNORMALITY RECOGNITION METHOD AND APPARATUS, STORAGE MEDIUM, AND ELECTRONIC DEVICE" filed on December 26, 2023, which is incorporated herein by reference in its entirety.

### FIELD OF THE TECHNOLOGY

This application relates to the field of computers, and in particular, to an abnormality recognition.

### BACKGROUND OF THE DISCLOSURE

In an abnormality recognition scenario, abnormality recognition is usually performed on an object entity by using a trained model. However, for a previous object entity, a model still needs to be trained, to successfully perform abnormality recognition on the previous object entity. In addition, model training also needs high resource support, causing a problem of low abnormality recognition efficiency. Therefore, there is the problem of low abnormality recognition efficiency.

For the foregoing problem, no effective solution has been provided at present.

### SUMMARY

Embodiments of the present disclosure provide an abnormality recognition method and apparatus, a storage medium, an electronic device, and a program product, to at least address a technical problem of low abnormality recognition efficiency.

According to one aspect of embodiments of the present disclosure, an abnormality recognition method is provided, including: acquiring a first image of an object; performing first-stage feature extraction on the first image to obtain at least one basic visual feature representing a visual attribute of an object surface; determining a target object type based on a feature similarity between the at least one basic visual feature and at least one first standard visual feature of a plurality of object types; acquiring target guidance information matching the target object type and for guiding a feature extraction process to focus on a feature related to the target object type; performing second-stage feature extraction on the first image based on the target guidance information, to obtain at least one second visual feature related to the target object type; comparing the at least one second visual feature with a second standard visual feature of a sample image of the target object type to obtain a comparison result; and determining an abnormality recognition result of the first image based on the comparison result.

According to another aspect of embodiments of the present disclosure, an abnormality recognition apparatus is further provided, including: a first acquiring unit, configured to acquire a first image of an object; a first extraction unit, configured to perform first-stage feature extraction on the first image to obtain at least one basic visual feature representing a visual attribute of an object surface; a first determining unit, configured to determine a target object type based on a feature similarity between the at least one basic visual feature and at least one first standard visual feature of a plurality of object types; a second acquiring unit, configured to acquire target guidance information matching the target object type and for guiding a feature extraction process to focus on a feature related to the target object type; a second extraction unit, configured to perform second-stage feature extraction on the first image based on the target guidance information, to obtain at least one second visual feature related to the target object type; a first comparison unit, configured to compare the at least one second visual feature with a second standard visual feature of a sample image of the target object type to obtain a comparison result; and a second determining unit, configured to determine an abnormality recognition result of the first image based on the comparison result.

According to still another aspect of embodiments of the present disclosure, an electronic device is further provided. The electronic device includes a memory, a processor, and a computer program stored on the memory and capable of being run on the processor, the processor performing the foregoing abnormality recognition method by using the computer program.

According to still another aspect, an embodiment of the present disclosure provides a storage medium, configured to store a computer program, the computer program being configured to perform the abnormality recognition method according to the foregoing aspects.

According to still another aspect, an embodiment of the present disclosure provides a computer program product including a computer program, the computer program product, when run on a computer, causing the computer to perform the abnormality recognition method according to the foregoing aspects.

In embodiments of the present disclosure, the first image to be recognized is acquired, the first image being the image obtained by performing collection on the object entity; the first-stage feature extraction is performed on the first image to obtain the at least one basic visual feature, the basic visual feature being configured for representing the visual attribute presented on the object surface, and the object surface including the surface of the object entity; the first visual feature having the feature similarity to the basic visual feature that is greater than or equal to the preset threshold is determined from the at least one standard visual feature, the standard visual feature being the feature obtained by performing the first-stage extraction on the plurality of sample images belonging to the plurality of object types, and the first visual feature being a feature obtained by performing the first-stage extraction on the second image belonging to the target object type; the target guidance information matching the first visual feature is acquired, the target guidance information being configured for guiding attention to the feature in the image that is related to the target object type; the second-stage feature extraction is performed on the first image by using the target guidance information, to obtain the at least one second visual feature related to the target object type; the at least one second visual feature is compared with the standard visual feature of the second image when the standard visual feature of the second image is acquired, to obtain the comparison result, the standard visual feature being a feature obtained by performing the second-stage feature extraction on the second image; and the abnormality recognition result of the first image is determined based on the comparison result. The basic visual feature and the first visual feature are extracted, and are compared with the standard visual feature of the second image, thereby implementing rapid recognition of a previous object entity. In addition, by introducing the target guidance information, in the embodiments, not only can rapid recognition be performed on the previous object entity, but also attention can be paid to the feature related to the target object type, thereby not only reducing computational load in a second-stage feature extraction process, but also ensuring recognition accuracy of the previous object entity, In this way, an objective of ensuring recognition accuracy is achieved while the rapid recognition is performed on the previous object entity, thereby achieving a technical effect of improving abnormality recognition efficiency, and further resolving the technical problem of low abnormality recognition efficiency.

### BRIEF DESCRIPTION OF THE DRAWINGS

FIG. 1 is a schematic diagram of an application environment of an abnormality recognition method according to an embodiment of the present disclosure.
FIG. 2 is a schematic flowchart of an abnormality recognition method according to an embodiment of the present disclosure.
FIG. 3 is a schematic diagram of an abnormality recognition method according to an embodiment of the present disclosure.
FIG. 4 is a schematic diagram of another abnormality recognition method according to an embodiment of the present disclosure.
FIG. 5 is a schematic diagram of another abnormality recognition method according to an embodiment of the present disclosure.
FIG. 6 is a schematic diagram of an abnormality recognition apparatus according to an embodiment of the present disclosure.
FIG. 7 is a schematic structural diagram of an electronic device according to an embodiment of the present disclosure.

### DESCRIPTION OF EMBODIMENTS

To make a person skilled in the art better understand solutions of this application, the following clearly and completely describes the technical solutions in embodiments of this application with reference to the accompanying drawings in embodiments of this application. Apparently, the described embodiments are merely some rather than all of embodiments of this application. All other embodiments obtained by persons of ordinary skill in the art based on embodiments of this application without creative efforts shall fall within the protection scope of this application.

In the specification, claims, and accompanying drawings of this application, terms such as "first" and "second" are intended to distinguish between similar objects but do not necessarily indicate a specific order or sequence. Data used in this way may be interchanged in a proper circumstance, so that embodiments of this application described herein can be implemented in a sequence different from those shown in the drawings or described herein. In addition, terms "include", "have", and any variants thereof are intended to cover a non-exclusive inclusion, for example, a process, method, system, product, or device that includes a series of steps or units is not necessarily limited to the steps or units specified expressly, but may include other steps or units not specified expressly or may include steps or units inherent to the process, method, product or device.

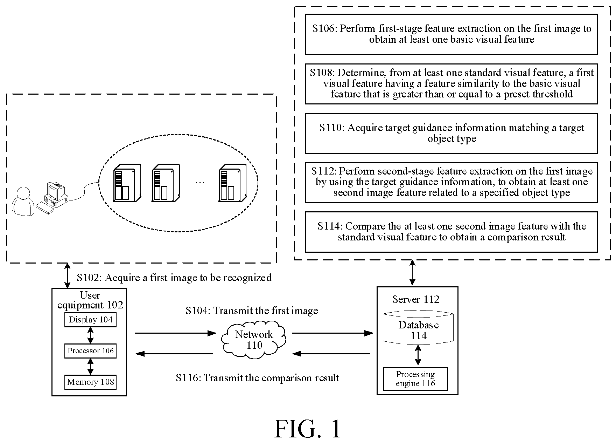

For ease of understanding, the following terms are explained:
Solutions provided in embodiments of the present disclosure relate to technologies such as a computer vision technology in artificial intelligence, and are specifically described through the following embodiments:
According to one aspect of embodiments of the present disclosure, an abnormality recognition method is provided. In some embodiments, in an implementation, the abnormality recognition method may be applied to, but is not limited to, an environment shown in FIG. 1. The environment may include, but is not limited to, a user equipment 102 and a server 112. The user equipment 102 may include, but is not limited to, a display 104, a processor 106, and a memory 108. The server 112 includes a database 114 and a processing engine 116.

A specific process may be as the following operations:
Operation S102: The user equipment 102 acquires a first image to be recognized, the first image being an image obtained by performing collection on an object entity.
Operation S104: The first image is transmitted to the server 112 through a network 110.
Operations S106 to S114: The server 112 performs first-stage feature extraction on the first image by using the processing engine 116, to obtain at least one basic visual feature; determines, from at least one standard visual feature, a first visual feature having a feature similarity to the basic visual feature that is greater than or equal to a preset threshold; acquires target guidance information matching a target object type; performs second-stage feature extraction on the first image by using the target guidance information, to obtain at least one second visual feature related to the target object type; and when a standard visual feature of a second image is acquired, compares the at least one second visual feature with the standard visual feature of the second image to obtain a comparison result. The standard visual feature of the second image may be the first stand visual feature or a second standard visual feature that is obtained by performing the second-stage feature extraction on the second image. The target guidance information is configured to guide a feature extraction process to focus on a feature related to the target object type, thereby reducing interference from irrelevant information. For example, the target guidance information may be used for indicating a region of interest in the first image for performing the second-stage feature extraction. The target guidance information may include attention parameters for adjusting a feature extraction focus of the second-stage feature extraction to a feature related to the target object type.
Operation S116: The comparison result is transmitted to the user equipment 102 through the network 110. The user equipment 102 determines an abnormality recognition result of the first image based on the comparison result through the processor 106, displays the abnormality recognition result on the display 104, and stores the comparison result in the memory 108.

In addition to the example shown in FIG. 1, the terminal device may be a terminal device configured with a target client, and may include, but is not limited to, at least one of the following: a mobile phone (such as an Android mobile phone or an iOS mobile phone), a notebook computer, a tablet computer, a palmtop computer, a mobile internet device (MID), a PAD, a desktop computer, a smart television, or the like. The target client may be a video client, an instant messaging client, a browser client, an education client, or the like. The network may include, but is not limited to, a wired network and a wireless network. The wired network includes a local area network, a metropolitan area network, and a wide area network. The wireless network includes Bluetooth, Wi-Fi, and other networks implementing wireless communication. The server may be a single server, a server cluster including a plurality of servers, or a cloud server. The foregoing is merely an example, and this is not limited in an embodiment.

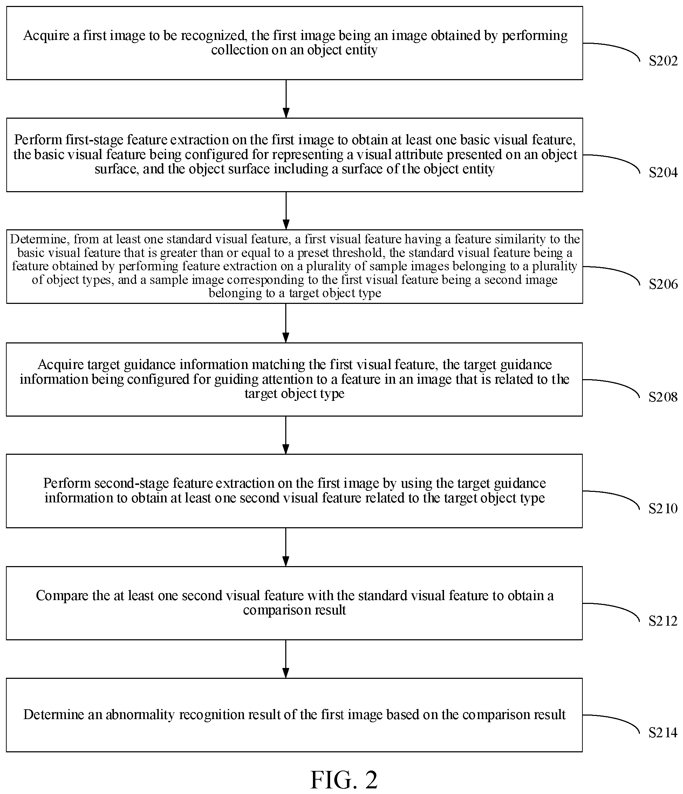

In some embodiments, in an implementation, as shown in FIG. 2, an abnormality recognition method may be performed by an electronic device. The electronic device may be, for example, the user equipment or the server shown in FIG. 1. Specific operations include the following:
S202: Acquire a first image to be recognized, the first image being an image obtained by performing collection on an object entity.
S204: Perform first-stage feature extraction on the first image to obtain at least one basic visual feature, the basic visual feature being configured for representing a visual attribute presented on an object surface, and the object surface including a surface of the object entity.
S206: Determine, from at least one standard visual feature, a first visual feature having a feature similarity to the basic visual feature that is greater than or equal to a preset threshold, the standard visual feature being a feature obtained by performing feature extraction on a plurality of sample images belonging to a plurality of object types, and a sample image corresponding to the first visual feature being a second image belonging to a target object type.
S208: Acquire target guidance information matching the first visual feature, the target guidance information being configured for guiding attention to a feature in an image that is related to the target object type.
S210: Perform second-stage feature extraction on the first image by using the target guidance information, to obtain at least one second visual feature related to the target object type.
S212: Compare the at least one second visual feature with a standard visual feature of the second image to obtain a comparison result. The standard visual feature of the second image may be the first standard visual feature or a second standard visual feature that is obtained by performing the second-stage feature extraction on the second image.
S214: Determine an abnormality recognition result of the first image based on the comparison result.

In an embodiment, the abnormality recognition method may be applied to, but is not limited to, a continuous detection scenario of a plurality of industrial products, achieving a result of locating abnormal products in the continuous detection scenario. For a model recognition method, each time an item produced on a production line changes, a detection model needs to be retrained and redeployed, even if a replacement item has been detected through the detection model previously. In the method provided in an embodiment, the detection model does not need to be retrained or redeployed for the item that has appeared previously, and additional training needs to be performed only when the production line switches to a new product, which can greatly reduce labor, material, and time costs for retraining and redeployment when an old product is encountered.

In an embodiment, the object entity may be understood as, but is not limited to, an object that actually exists or needs to be recognized, and may be an entity in any form, such as a product, a part, or a living organism. Assuming that on a production line, abnormality recognition needs to be performed on each produced part, the part may be understood as an object entity. Each time a new part is produced and captured by a camera, an image captured by the camera may be considered as the first image.

In an embodiment, a basic visual feature that can describe a visual attribute of the surface of the object entity is extracted from the image, to capture various attributes of the object surface, such as a color, a texture, and a shape, and provide important information for subsequent abnormality recognition. The visual attribute of the object surface may be a feature that is presented on the object surface and that can be perceived and recognized by a visual system, such as gloss, the color, the texture, the shape, and transparency, which is a basis for people to observe and recognize the object, and is an important basis for a computer vision system to perform image analysis and understanding.

In an embodiment, the basic visual feature may be a feature that is extracted from the image and configured for describing the visual attribute of the surface of the object entity, such as a color feature, a shape feature, a spatial relationship feature, and a local feature, which covers a plurality of aspects, and constitutes a comprehensive description of a visual characteristic of the object surface.

In an embodiment, the first visual feature similar to the basic visual feature extracted from the first image is determined from a series of standard visual features. For example, similarities between the basic visual feature and the standard visual features extracted from the plurality of sample images are compared, and from these standard visual features, a standard visual feature having a similarity greater than or equal to the preset threshold is determined as the first visual feature.

For further example, it is assumed that there is a sample image library including a plurality of types of fruit, and each type of fruit has a plurality of sample images. A standard visual feature is extracted from the sample images. There is an apple image to be recognized (the first image), and basic visual features are extracted from the apple image to be recognized. Next, in an embodiment, these basic visual features are compared with the standard visual feature in the sample image library, to find a first visual feature having a similarity to the apple image that is greater than or equal to a preset threshold. Fruit included in a sample image corresponding to the first visual feature is very similar to an apple in terms of an object surface, and has a large probability of belonging to the same object type. Therefore, these first visual features are configured for subsequently performing abnormality recognition on the apple image.

In an embodiment, the standard visual feature may be a representative visual feature extracted from a plurality of sample images belonging to object types. The standard visual feature has been subjected to processing and extraction, and can accurately describe and represent a typical visual attribute of a certain object type. Extraction of the standard visual feature usually involves analyzing and learning a large quantity of sample images, to extract a most representative and distinguishing feature, which may be the color, the texture, the shape, the spatial relationship, and the like, to describe the visual attribute of the object surface.

In an embodiment, the feature similarity may be an indicator configured for measuring a similarity degree between two visual features, and is usually obtained by calculating a distance or a correlation between the two features. During abnormality recognition, the feature similarity is configured for comparing a similarity degree between the basic visual feature extracted from the image to be recognized and the standard visual feature extracted from the sample image. A calculation manner of the feature similarity may be, for example, a Euclidean distance, a cosine similarity, or a Pearson correlation coefficient. When a similarity between two features is higher than a certain preset threshold, it may be considered that the features are similar.

In an embodiment, the object type refers to a classification or a category of objects having a similar visual attribute and feature. During abnormality recognition, the object type may refer to a normal and non-anomalous object, or may refer to an abnormal object of a particular type. For example, on an industrial production line, the object type may refer to a type A of a product A, a type B of a product B, or a type C of a product C. By recognizing and classifying the object type, an abnormal case can be found and processed in time.

In an embodiment, the sample image is an image data set configured for extracting the standard visual feature and the first visual feature. These data sets include images of a plurality of different object types, and each object type has a plurality of sample images. By analyzing and learning the sample images, standard visual features representing various object types can be extracted, including the first visual feature configured for comparison and recognition.

In an embodiment, the target guidance information matching the target object type is acquired. A function of the target guidance information is to guide attention to features that are in the image and are related to the target object type, to recognize and analyze the features more accurately. Acquiring and using the target guidance information matching the target object type can significantly improve accuracy and efficiency of abnormality recognition. By guiding an image processing algorithm to pay attention to the feature related to the target object type, interference of irrelevant information to feature extraction can be reduced, thereby improving accuracy and efficiency of feature extraction. This helps recognize an abnormal object or phenomenon more accurately and take corresponding processing measures in time. In addition, by using the target guidance information, a requirement for manual intervention can also be reduced, a degree of automatic processing can be improved, and costs and complexity of abnormality recognition can be reduced.

For further example, an abnormality recognition task is being performed for a specific type of fruit (such as an apple). In this case, the target guidance information may include information about visual features such as a color, a shape, and a texture of the apple. The information is configured for guiding the image processing algorithm to pay more attention to features related to the apple, such as a red or green region, a circular or elliptic shape, and a specific texture mode. By acquiring and using the target guidance information, in an embodiment, the feature related to the apple can be more accurately extracted from the image, to perform abnormality recognition.

In an embodiment, the target guidance information may be information specifically designed for guiding an image processing or analysis algorithm to pay more attention to a feature related to a specific object or task, and may be in a plurality of forms, such as a preset rule, a model or parameter learned from a large amount of data, or even guidance obtained through expert experience or user interaction. The target guidance information can be configured for enhancing a feature extraction process, so that more attention is paid to the feature related to the task. For example, in a facial recognition task, the target guidance information may instruct the algorithm to pay more attention to key regions such as eyes, a nose, and a mouth. However, in deep learning, an attention mechanism is a commonly used technology that dynamically adjusts an attention degree of the model for different image regions by using the target guidance information. This can help the model to better understand and explain the image. In addition, the target guidance information may also be used as a supervision signal in a training process, to help the model learn and converge to a good solution more quickly.

In an embodiment, the second-stage feature extraction is performed by using the target guidance information, so that accuracy and correlation of the second visual feature can be significantly improved. By guiding the algorithm to pay attention to the feature related to the target object type, interference of irrelevant information can be reduced, thereby improving accuracy and efficiency of feature extraction. This helps recognize an object in the image more accurately and distinguish a subtle difference between different object types. In addition, the extracted second visual feature may further be configured for a further data processing task, such as object classification, scene understanding, and three-dimensional reconstruction, to provide strong support for improving performance of the computer vision system.

For further example, it is assumed that there is an image data set including a plurality of types of fruit, and target guidance information matching a target object type of an apple has been acquired. The target guidance information may include a feature such as a color, a shape, and a texture of the apple. In an embodiment, the second-stage feature extraction can be performed on a first image including an apple by using the target guidance information, to focus on extracting a second visual feature related to the apple. These second visual features may include smoothness of apple skin, existence or absence of speckles or stripes, and the like, which will be configured for more accurately recognizing the apple in the image and distinguishing the apple from other fruit types.

In an embodiment, expression of the second visual feature may be, but is not limited to being, the same as that of the first visual feature, or may be, but is not limited to being, different from that of the first visual feature. For example, the second visual feature may be a feature configured for describing a texture structure of the object surface in the image. The texture is a visual attribute of the object surface, and usually includes many small, repeated, or periodic patterns. These modes may be a result of a combined action of factors such as a micro-geometric shape, a lighting condition, and a material property of the object surface, and can provide abundant information about a structure and the material property of the object surface, thereby facilitating recognition and classification of the object. Compared with other visual features such as the color and the shape, the second visual feature is usually more robust to changes of lighting and a view angle.

In an embodiment, a texture attribute refers to a specific texture characteristic presented on the object surface. The attributes may include roughness, smoothness, directionality, regularity, and the like. For example, a surface of a stone may exhibit rough and irregular texture attributes, and a surface of a piece of glass may exhibit smooth and reflective texture attributes.

In an embodiment, the at least one second visual feature related to the target object type refers to a second visual feature closely related to a specific object type. Each object type may have one or more unique second visual features. These features are unique to an object of this type, or constitute primary distinctions between the object of this type and an object of another type. Using wood as an example, typical second visual features of wood may include annual rings, a direction and a density of wood grain, and the like. These features can be configured for distinguishing different types of woods, such as oak and pine. During image processing, extraction and analysis of the second visual feature of the wood can facilitate automatic recognition and classification of different types of woods.

In an embodiment, the at least one second visual feature extracted from the first image is compared with the standard visual feature of the second image to obtain a quantified comparison result, thereby accurately determining whether the first image is abnormal. The standard visual feature of the second image may be the first stand visual feature or a second standard visual feature that is obtained by performing the second-stage feature extraction on the second image. In addition, accuracy and efficiency of abnormality recognition can be significantly improved, and cases of false positives and false negatives can be reduced. In addition, because the second visual feature is robust to changes of lighting and the view angle, this embodiment has good stability and reliability in an actual application.

For further example, it is assumed that there is a data set including a normal apple image, and the standard visual feature is extracted from the data set. Now, for an apple image to be recognized (that is, the first image), at least one second visual feature thereof is extracted in an embodiment. Next, in an embodiment, the feature is compared with the standard visual feature of the second image to obtain a comparison result. If the comparison result shows that the two features are very similar, in an embodiment, it may be considered that the apple image to be recognized is normal. If the comparison result shows that the two features are greatly different, in an embodiment, it may be considered that the image is abnormal.

In an embodiment, the standard visual feature is a second visual feature extracted from an image that is considered to be "normal" or "non-anomalous". These features represent texture attributes that the type of object is to have in a normal case. The standard visual feature plays a role of "benchmark" in abnormality recognition. When abnormality detection needs to be performed on a new image, a second visual feature of the new image may be compared with the standard visual feature, to determine whether an abnormality exists. Usually, the standard visual feature is obtained by performing feature extraction and statistical analysis on a large quantity of normal sample images. In this way, a specific algorithm or tool, such as a deep learning model and an image processing technology, may need to be used to extract and describe the features.

In an embodiment, the comparison result is a result obtained by comparing a second visual feature of an image to be detected with the standard visual feature. The result is usually a value or a set of values, and is configured to quantify a similarity or a difference between the two features. The comparison result may include a similarity score, a difference score, a distance measure, and the like. For example, if the Euclidean distance is used as a similarity measure, the comparison result is a value representing a difference degree between the image to be detected and the standard image in terms of the second visual feature.

In an embodiment, the abnormality recognition result is a conclusion about whether the image to be detected is abnormal that is drawn based on the comparison result. The result is usually a binary label (normal or abnormal), or a continuous value representing an abnormality degree. The abnormality recognition result is usually determined by comparing the comparison result with a preset threshold or a comparison standard. The image to be detected is determined to be abnormal if the comparison result exceeds the threshold or does not meet the comparison standard; otherwise, it is determined to be normal.

In an embodiment, by combining feature extraction and comparison processes at two stages and by using the target guidance information to pay attention to the feature related to the target object type, this embodiment can significantly improve accuracy and efficiency of abnormality recognition, and can effectively reduce cases of false positives and false negatives, thereby improving accuracy and efficiency of abnormality recognition. In addition, because a plurality of types of features and guidance information are used, this embodiment also has high flexibility and adaptability, and can be applied to different types of objects and abnormality recognition tasks.

In an embodiment of the present disclosure, the standard visual feature used in a first stage and the standard visual feature used in a second stage may be the same feature. For example, a sample image serves as the second image. After the basic visual feature of the first image is obtained through the first stage, a similarity comparison is performed between the basic visual image and a standard visual feature of the sample image a. After the second visual feature of the first image is obtained through the second stage, the second visual feature is compared with the same standard visual feature of the sample image a. In other words, for the same sample image, feature extraction is not repeatedly performed to obtain the standard visual feature of the sample image based on feature comparisons at different stages. In this case, the standard visual feature may be obtained through pre-extraction.

In some cases, alternatively, feature extraction may be performed twice on the same sample image serving as the second image in the foregoing two stages, to respectively obtain standard visual features configured for feature comparisons in different stages. This is not limited in the present disclosure.

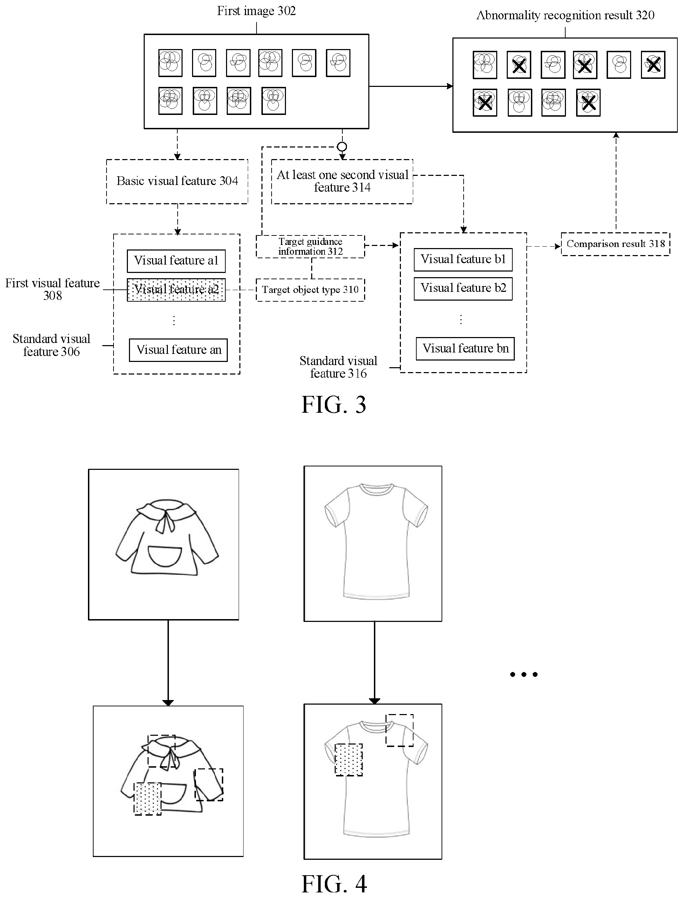

For further example, as shown in FIG. 3, a first image 302 to be recognized is acquired, the first image 302 being an image obtained by performing collection on an object entity; first-stage feature extraction is performed on the first image 302 to obtain at least one basic visual feature 304, the basic visual feature 304 being configured for representing a visual attribute presented on an object surface, and the object surface including a surface of the object entity; a first visual feature 308 having a feature similarity to the basic visual feature 304 that is greater than or equal to a preset threshold is determined from at least one standard visual feature 306, the standard visual feature 306 being a feature obtained by performing first-stage extraction on a plurality of sample images belonging to each object type, the first visual feature 308 being a feature obtained by performing first-stage extraction on a second image belonging to a target object type 310, the plurality of sample images including the second image, and the second image being an image obtained by performing collection on a standard object entity belonging to the target object type 310; target guidance information 312 matching the target object type 310 is acquired, the target guidance information 312 being configured for guiding attention to a feature in an image that is related to the target object type 310; second-stage feature extraction is performed on the first image 302 by using the target guidance information 312, to obtain at least one second visual feature 314 related to the target object type 310, the second visual feature being configured for representing a texture attribute presented on the object surface; when a standard visual feature 316 of the second image is acquired, the at least one second visual feature 314 is compared with the standard visual feature 316 to obtain a comparison result 318, the standard visual feature 316 being a feature obtained by performing second-stage feature extraction on the second image; and an abnormality recognition result 320 of the first image 302 is determined based on the comparison result 318.

In an embodiment corresponding to FIG. 3, for the standard visual feature 306 and the standard visual feature 316, standard visual features for the same sample image may be the same standard visual feature.

According to this embodiment provided in the present disclosure, the basic visual feature and the first visual feature are extracted, and are compared with the standard visual feature of the second image, thereby implementing rapid recognition of a previous object entity. In addition, by introducing the target guidance information, in an embodiment, not only can rapid recognition be performed on the previous object entity, but also attention can be paid to the feature related to the target object type, thereby not only reducing computational load in a second-stage feature extraction process, but also ensuring recognition accuracy of the previous object entity, In this way, an objective of ensuring recognition accuracy is achieved while the rapid recognition is performed on the previous object entity, thereby achieving a technical effect of improving abnormality recognition efficiency.

In an embodiment, before acquiring the target guidance information matching the target object type, the method further includes the following operations:
S1-1: Perform region segmentation on the second image to obtain a first region and a second region, a feature similarity between second visual features in the first region or the second region being greater than or equal to a first threshold.
S1-2: Guide, by using initial guidance information, a process of performing the second-stage feature extraction on the image belonging to the target object type, to extract a first sample feature and a second sample feature, the first sample feature being a feature having a first feature attribute, the second sample feature being a feature having a second feature attribute, the first feature attribute being a feature attribute in the first region, and the second feature attribute being a feature attribute in the second region.
S1-3: Compare the first sample feature with a second visual feature in the first region to obtain a first result, and compare the second sample feature with a second visual feature in the second region to obtain a second result.
S1-4: Adjust the initial guidance information based on the first result and the second result to obtain the target guidance information.

In an embodiment, the region segmentation may be a key operation in image processing, and relates to segmenting the image into a plurality of regions having similar visual attributes. The regions may be segmented based on a color, a texture, a shape, or other image features. During region segmentation, an algorithm attempts to recognize and aggregate visually similar parts in the image, while reserving boundaries between different parts. A main objective of the region segmentation is to simplify image representation, highlight an important image structure, and reduce complexity of a subsequent processing task. By segmenting the image into regions having similar attributes, image content can be analyzed and understood more easily, to extract useful information. The region segmentation can be implemented through a plurality of methods, including, but not limited to, threshold processing, edge detection, region growth, a level set method, a clustering algorithm (such as K-means), and a graph cut method.

In an embodiment, a feature attribute shared by the second visual features in regions refers to a common or similar visual characteristic presented by a texture in a specific region. The feature attributes may be descriptions based on aspects such as a shape, a size, a direction, a density, a periodicity, and roughness of the texture. Understanding the feature attribute shared by the second visual features in the regions is very important for image processing and a computer vision task. By recognizing and analyzing these feature attributes, in an embodiment, image content can be better understood, and useful information can be extracted from the image content. For example, in an object recognition task, different objects may have different second visual feature attributes. By recognizing and comparing these attributes, an object can be classified and recognized.

In one embodiment, the initial guidance information provides this embodiment with basic information or an initial recognition result about the target object type. The information may be a basic feature such as a shape, a color, or a texture of the object, or a result obtained from the first-stage feature extraction. Based on the initial guidance information, the second-stage feature extraction can be performed on the image more targetedly in an embodiment.

In an embodiment, the image is segmented into a plurality of image blocks. Each image block represents a local region of the image and includes pixel information in the region. By analyzing and processing these image blocks, more detailed and specific feature information can be extracted in an embodiment.

Specifically, in an embodiment, the initial guidance information is configured for guiding a feature extraction process of the image blocks. Attention may be paid to those image blocks related to the initial guidance information, to extract a feature therein as the first sample feature. In addition, in an embodiment, a relationship between image blocks and context information are also considered, to extract a higher-level feature related to the target object type as the second sample feature.

In this manner, the image block serves as a carrier of local information. Under guidance of the initial guidance information, the feature information related to the target object type is more accurately extracted in an embodiment, thereby improving efficiency and accuracy of feature extraction, and providing strong support for subsequent classification, recognition, or reconstruction tasks.

In an embodiment, first, the region segmentation and the feature extraction are performed on the second image, to more accurately recognize and extract a second visual feature related to the target object type. Second, the algorithm is guided to pay attention to a texture having a specific feature attribute, to further improve pertinence and accuracy of feature extraction. Finally, comparison and verification are performed between the sample feature and the second visual feature in the region, to ensure effectiveness and accuracy of the finally determined feature attribute of attention, thereby significantly improving accuracy and efficiency of subsequent abnormality recognition.

For further example, it is assumed that a fabric having a special texture needs to be recognized. First, in an embodiment, a sample image (a second image) of such a fabric is acquired, and the region segmentation is performed on the sample image to obtain two regions having similar second visual features: a first region and a second region. Next, in an embodiment, the second visual features in the two regions are analyzed, to respectively extract a first feature attribute and a second feature attribute shared by the two regions, for example, a density and a direction of the texture. Then, in an embodiment, the algorithm is guided to pay attention to textures having these feature attributes, to extract a first sample feature and a second sample feature from other images belonging to such a fabric. Next, in an embodiment, these sample features are compared with a second visual feature in an original region to obtain a first result and a second result. If the two results both indicate that a similarity between the sample feature and the second visual feature in the region exceeds set thresholds (a second threshold and a third threshold), it is confirmed in an embodiment that the first feature attribute and the second feature attribute are valid feature attributes of attention. Otherwise, in an embodiment, the feature attributes need to be adjusted, and the foregoing process is repeated until an accurate feature attribute of attention is found.

According to this embodiment provided in the present disclosure, the region segmentation is performed on the second image to obtain the first region and the second region, the feature similarity between second visual features in the first region or the second region is greater than or equal to the first threshold. By using the initial guidance information, the second-stage feature extraction process is guided to be performed on the image belonging to the target object type, to extract the first sample feature and the second sample feature, the first sample feature being the feature having the first feature attribute, the second sample feature being the feature having the second feature attribute, the first feature attribute being the feature attribute in the first region, and the second feature attribute being the feature attribute in the second region. The first sample feature is compared with the second visual feature in the first region to obtain the first result, and the second sample feature is compared with the second visual feature in the second region to obtain the second result. The initial guidance information is adjusted based on the first result and the second result, to obtain the target guidance information. In this way, an objective of improving pertinence and accuracy of feature extraction is achieved, thereby achieving the technical effect of providing effective support for subsequent efficient abnormality recognition.

In an embodiment, when the at least one second visual feature is a plurality of second visual features, comparing the at least one second visual feature with the standard visual feature of the second image to obtain the comparison result includes the following operations:
S2-1: Acquire first distances respectively between the plurality of second visual features and the standard visual feature of the second image in a feature space, the distances in the feature space being in an inverse relationship with a similarity between the features.
S2-2: Determine, from the plurality of second visual features, a first feature with the longest first distance and a second feature with the shortest first distance.
S2-3: Acquire a second distance between the first feature and second feature in the feature space.
S2-4: Acquire the comparison result based on the second distance.

In an embodiment, the feature space is a high-dimensional space configured for representing and comparing image features. In this space, each point represents a feature, and coordinates of the point are formed by dimensions of the feature. The feature space provides a method for visualizing and quantifying a relationship between features, so that similarities and differences between different features can be understood and compared more easily.

In an embodiment, in the feature space, the distance is a measurement standard, and is configured for quantifying a similarity or a difference between two features. The distance is usually calculated according to a specific distance measurement function, such as a Euclidean distance, a Manhattan distance, or a cosine similarity. Different distance measurement functions may emphasize different feature attributes or characteristics. In the feature space, a distance between two points reflects a similarity between features represented by the two points. A closer distance indicates a higher similarity. A longer distance indicates a lower similarity. The similarity measurement can help understand relationships between different features, and which features are more important or useful in a specific task.

In an embodiment, quantitative evaluation about a similarity between the at least one second visual feature and the standard visual feature may be obtained, which can help recognize a second visual feature most similar to the standard visual feature and a second visual feature least similar to the standard visual feature, and learn a difference degree between the second visual features. The information is very valuable for subsequent image processing and analysis tasks (such as object recognition and scene understanding), because the information can help understand and explain image content more accurately.

For further example, it is assumed that there are a set of second visual features A, B, and C and a standard visual feature S. In the feature space, a distance between S and each of A, B, and C is measured, and it is found that A is the farthest away from S, and C is the closest to S. Next, a distance (a second distance) between A and C is calculated. If the distance is very large, a difference between the set of second visual features is very large, and a comparison result may indicate that the set of second visual features does not well match the standard visual feature. If the distance is very small, a difference between the set of second visual features is small, and the comparison result may be more positive.

According to this embodiment provided in the present disclosure, the first distance between each of the at least one second visual feature and the standard visual feature in the feature space is acquired, the distance in the feature space being in the inverse relationship with the similarity between the features. From the at least one second visual feature, the first feature with the longest first distance and the second feature with the shortest first distance are determined. The second distance between the first feature and the second feature in the feature space is acquired. The comparison result is acquired based on the second distance. In this way, an objective of understanding and explaining image content more accurately can be achieved, thereby achieving a technical effect of improving accuracy of the comparison result.

In an embodiment, acquiring the comparison result based on the second distance includes the following operations:
S3-1: Calculate a third distance between a third feature and the first feature in the feature space, the third feature being a second visual feature adjacent to the second feature in the feature space.
S3-2: Perform robust optimization on the second distance by using the third distance, to obtain a target distance, the comparison result including the target distance.

In an embodiment, when the at least one basic visual feature is a first quantity of basic visual features, performing the first-stage feature extraction on the first image to obtain the at least one basic visual feature includes the following operations:
S4-1: Segment the first image into a first quantity of image blocks, the image blocks being configured for representing local image regions of the first image.
S4-2: Perform the first-stage feature extraction on the first quantity of image blocks to obtain a first image feature corresponding to each image block as the basic visual feature.

When the at least one second visual feature is a second quantity of second visual features, performing the second-stage feature extraction on the first image to obtain at least one second visual feature related to the target object type includes the following operations:
S5-1: Segment the first image into a second quantity of image blocks, the image blocks being configured for representing local image regions of the first image.
S5-2: Perform the second-stage feature extraction on the second quantity of image blocks, to obtain a second image feature corresponding to each image block as the second visual feature.

In an embodiment, the image blocks may be a set of adjacent pixel regions having the same characteristic (for example, grayscale value) in the image. During image processing, these pixel regions adjacent to each other are usually considered as a whole for processing and analysis. A concept of the image block is applied to a plurality of image processing tasks, such as feature extraction, image compression, and image enhancement. Information in the image can be extracted more efficiently and calculation complexity is reduced by processing the image blocks.

In an embodiment, the first quantity and the second quantity may be different. For example, considering features extracted from the image blocks in the first stage, which constitute basic visual features and are configured for determining the object type, there is a less strict requirement on accuracy. Further, a smaller first quantity may be used for coarsening a granularity of the image blocks, to improve feature extraction efficiency in the first stage. The second-stage feature extraction needs to be more related to the target object type, and a requirement on accuracy becomes strict. Further, a larger second quantity may be used for refining the granularity of the image blocks, to improve feature extraction accuracy in the second stage. In other words, the first quantity in an embodiment may be less than the second quantity.

In an embodiment, by using a two-stage feature extraction method, basic feature information can be first acquired from each local region of the image. Then, in the second stage, by means of more targeted processing, a feature closely related to the target object type can be further extracted, thereby further improving recognition accuracy of the target object, especially when a background is complex or the target object differs little from the background.

For further example, it is assumed that there is a first image of a basket including fruits. In the first stage, the image is segmented into a plurality of image blocks, and each image block includes a part of a fruit. From these image blocks, the basic visual feature such as a color and a shape may be extracted as the first image feature. In the second stage, if it is known that the target object type is an apple, more attention may be paid to those image blocks related to an apple feature, and a more specific feature, such as a red color and a specific shape or texture of the apple, is extracted from the image blocks as the second image feature.

According to this embodiment provided in the present disclosure, the first image is segmented into the first quantity of image blocks, the image blocks being configured for representing the local image regions of the first image. The first-stage feature extraction is performed on the first quantity of image blocks to obtain the first image feature corresponding to each image block, the basic visual feature including the first image feature. The first image is segmented into the second quantity of image blocks, the image blocks being configured for representing the local image regions of the first image. The second-stage feature extraction is performed on the second quantity of image blocks to obtain the second image feature corresponding to each image block, the second visual feature including the second image feature. In this way, an objective of performing two-stage feature extraction based on the granularity of the image block can be achieved, thereby achieving a technical effect of improving target object recognition accuracy.

In an embodiment, after performing the second-stage feature extraction on the second quantity of image blocks to obtain the second image feature corresponding to each image block, the method further includes:
performing the following operations, until it is obtained that a quantity of key image features stored based on the target object type is greater than or equal to a quantity threshold:
S6-1: Determine a current image feature from the second image feature corresponding to each image block.
S6-2: Calculate a fourth distance between an image feature other than the current image feature in the second image feature corresponding to each image block and the current image feature in a feature space, the distance in the feature space being in an inverse relationship with a similarity between the features.
S6-3: Determine a second image feature with the largest fourth distance as the key image feature.
S6-4: Store the obtained key image features based on the target object type.
S6-5: Determine a next image feature from the second image feature corresponding to each image block when the quantity of obtained key image features is less than the quantity threshold, and use the next image feature as the current image feature.

In an embodiment, the key image feature is configured for updating a standard visual feature belonging to the target object type. For example, when the second-stage feature extraction is performed on the second quantity of image blocks to obtain the second image feature corresponding to each image block, the standard visual feature belonging to the target object type is the standard visual feature of the second image. After the key image feature is obtained, the standard visual feature of the second image can be optimized by using the key image feature, to be closer to a real expression of the target object type, thereby implementing update of the target object type.

According to this embodiment, a key image feature most related to the target object type can be gradually extracted. These key features not only are highly related to the target object type, but also have a great difference with each other, so that some key characteristics that describe the target object type more comprehensively can be pre-stored. After a sufficient quantity of key image features are acquired, the features may be configured for subsequent classification, recognition, or reconstruction tasks, balancing both accuracy and efficiency of abnormality recognition.

For further example, it is assumed that there is an image including a plurality of fruits, and the target object type is an apple. After the second image features of the plurality of image blocks are extracted in the second stage, an iterative process starts. First, a feature of an image block is selected as the current image feature. Then, fourth distances between the feature and all other image block features are calculated. Assuming that it is found that a feature of an image block has the largest difference with the current image feature, this feature is determined as the key image feature, and is stored. If a quantity of stored key image features is insufficient, a feature of a next image block continues to be selected as the current image feature, and the foregoing process is repeated. If the quantity of the stored key image features is sufficient, repetition is ended.

According to this embodiment provided in the present disclosure, the following operations are performed, until the key image feature stored based on the target object type is obtained: The current image feature is determined from the second image features corresponding to the image blocks. The fourth distance between an image feature other than the current image feature in the second image feature corresponding to each image block and the current image feature in the feature space is calculated, the distance in the feature space being in the inverse relationship with the similarity between the features. The second image feature with the largest fourth distance is determined as the key image feature. When the quantity of the obtained key image features is greater than or equal to the quantity threshold, the obtained key image features are stored based on the target object type. When the obtained quantity of the key image features is less than the quantity threshold, the next image feature is determined from the second image features corresponding to the image blocks, and the next image feature is used as the current image feature. In this way, the objective of pre-storing some key features that can describe the target object type more comprehensively can be achieved, thereby achieving the technical effect of balancing both accuracy and efficiency of abnormality recognition.

In an embodiment, after performing the first-stage feature extraction on the first image to obtain the at least one basic visual feature, the method further includes the following operations:
S7-1: Set an object type to which the object entity belongs as an additional object type when a feature similarity between each of the at least one standard visual feature and the basic visual feature is less than the preset threshold, the additional object type being a type other than a rated object type to which the plurality of sample images belong.
S7-2: Perform collection on a standard object entity of the additional object type to obtain a plurality of third images, and use the third images as the sample images.

In an embodiment, in the field of image recognition and processing, a database (the plurality of sample images) including a plurality of known object types is usually constructed. The database is configured for training the algorithm, to recognize these known types. However, in an actual application, a system may encounter objects that are not in the database, and in this case, a mechanism is needed to process these unknown and additional object types. In other words, the additional object type is not any object type of a known or predefined rated object type.

For further example, it is assumed that there is a recognition system, which can recognize two object types: "cats" and "dogs". When the system encounters an image including a "rabbit", the system extracts basic visual features. Then, the system compares these features with standard visual features of "cats" and "dogs". If similarities to both are lower than the preset threshold, the system may consider that this is the additional object type, namely, the "rabbit". Next, the system may collect an image of a standard object entity of the "rabbit", namely, the third image, and add the image to the sample image.

An additional operation can enhance an abnormality recognition capability, so that the system can process more types of object entities. By dynamically adding a newly recognized object type to a sample image library, a wider range of scenarios and objects can be gradually adapted to and recognized. In addition, this embodiment can further improve flexibility of abnormality recognition, so that the abnormality recognition can better deal with various challenges and changes in an actual application.

According to this embodiment provided in the present disclosure, the object type to which the object entity belongs is set as the additional object type when the feature similarity between each of the at least one standard visual feature and the basic visual feature is less than the preset threshold, the additional object type being a type other than the rated object type to which the plurality of sample images belongs. Collection is performed on the standard object entity of the additional object type to obtain the plurality of third images, and the third images are used as the sample images, so that the additional operation can enhance the abnormality recognition capability. In this way, more types of object entities can be processed, thereby achieving a technical effect of improving flexibility of abnormality recognition.

In an embodiment, for ease of understanding, the foregoing abnormality recognition method is applied to a continuous detection scenario. As shown in FIG. 4, a locating result of an abnormal product is achieved in the continuous detection scenario.

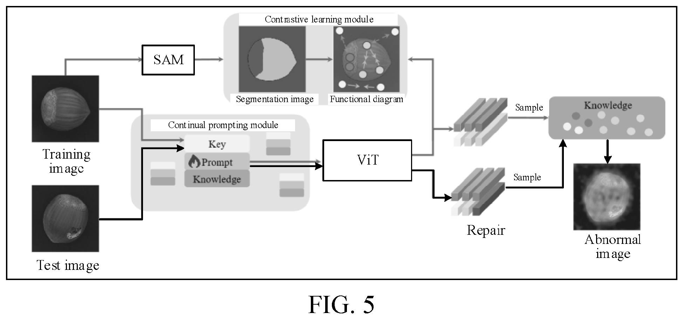

In an embodiment, as shown in FIG. 5, a procedure to which the abnormality recognition method is applied includes a training procedure and a testing procedure, and is performed by a continual prompting module (CPM) and a structure-based contrastive learning (SCL) module.

Specifically, the CPM is mainly divided into three parts. First, there is a key configured for one-to-one retrieval of an image to a module. Second, there is prompt configured for extracting a category-specific feature. Finally, there is a knowledge part configured for storing the category-specific feature.

The structure-based contrastive learning (SCL) module aims to distill knowledge of a segment anything model (SAM) to a basic vision transformer (ViT). Feature representation of the ViT for a specific object can be changed by training the prompt. The prompt is an additional parameter with a small order of magnitude, and can be directly superimposed on features of each layer of the ViT, to implement fine tuning of the model.

In an embodiment, in the training procedure, features of a training image are first extracted by using the ViT and stored into the key for use during testing. Then, the image passes through the SAM to obtain a segmentation image. Different regions in the segmentation image have a consistent second visual feature and corresponding label. The information is then transferred to feature images extracted by the ViT, so that the ViT can perform contrastive learning based on the segmentation image of the SAM.

With the features extracted by the ViT and labels obtained by the SAM, contrastive learning can be performed based on this, to obtain a gradient for backhaul. A contrastive loss function used in FIG. 5 is configured for loss calculation in a contrastive learning process. First, the feature images are normalized. Next, a similarity matrix of block features is calculated. A mask is created based on consistency of the labels, and a loss is calculated using the mask, to ensure that features having a same label are close to each other and features having different labels are far away from each other. This is defined as follows:
def contrastive_loss (features, labels, temperature=0.5):
# b, h*w, c=features.shape
# 1. Normalize the feature images
features_normalized=F.normalize (features, dim=2)
# 2. Calculate the similarity matrix of the block features 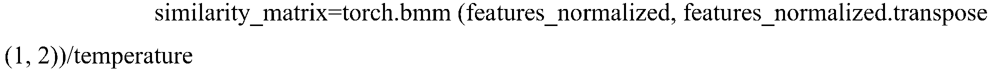 similarity_matrix=torch.bmm (features_normalized, features_normalized.transpose (1, 2))/temperature
# 3. Create the mask based on the consistency of the labels
mask=(labels.unsqueeze (1)==labels.unsqueeze (2)). float ()
# 4. Calculate the loss based on the mask, so that the features having the same label are brought together and the features having the different labels are pulled away. $loss = \left(-similarity_matrix*mask+\left(1-mask\right)*similarity_matrix.exp\left(\right)\right) . mean \left(\right)$
return loss

Further, after training for 50 epochs, the prompt is optimized, and in combination with the features extracted by the ViT, can better represent specific second visual features of different items. Subsequently, the model performs feature extraction on all images of each type, and selects the most representative feature by using a farthest point sampling algorithm (FPS) and stores the most representative feature in the knowledge part of the CPM.

However, in the testing procedure, features of an inputted image (Inference Image) in FIG. 5 are first extracted by using the ViT. These features are compared with features of the key module in the CPM one by one, to find a product type corresponding to the inputted image and a corresponding CPM. Once the corresponding CPM is found, the inputted image is processed again by using the ViT, but this time, prompt of the corresponding CPM is additionally added, to extract category-specific features. After these features are obtained, the features are compared with the knowledge in the corresponding CPM, to calculate an abnormality score of a corresponding image block. Manners of retrieving the key corresponding to the CPM based on the feature and retrieving the knowledge of the CPM based on the feature for comparison are the same. In this manner, the method can accurately recognize and locate an abnormal region in the inputted image, thereby providing an important basis for subsequent abnormality processing and analysis.

It is assumed that all features of an image are x^{test}. A block feature m^{test} is any feature of x^{test}. If a to-be-retrieved key or knowledge is K, and m is any feature of K, to retrieve a feature in K that is closest to m^{test}, the following formula (1), formula (2), and formula (3) may be performed in a manner of PatchCore: ${m}^{test , ∗} , m * = {argmax}_{{m}^{test} ∈ P \left({x}^{test}\right)} {argmin}_{m ∈ K} {\left‖{m}^{test}-m\right‖}_{2}$ (1) $s * = {\left‖{m}^{test , ∗}-m*\right‖}_{2}$ (2) $s = \left(1-\frac{exp {\left‖{m}^{test , ∗}-m*\right‖}_{2}}{{\sum }_{m ∈ {N}_{b} \left(m*\right)} exp {\left‖{m}^{test , ∗}-m\right‖}_{2}}\right) ⋅ s *$ (3)

An abnormality score between any x^{test} and K can be calculated through the foregoing formula (1), formula (2), and formula (3). Formula (1) can be configured for finding representative features m^{test, *}, m^{*} of a distance between x^{test} and K. m^{test, *} is a feature in x^{test} that is farthest away from K, and m^{*} is a feature in K that is closest to m^{test, *}. As shown in formula (2), a basic abnormality score s^{*} can be obtained by calculating a distance between the two. Furthermore, a distance between a neighbor of m^{*} in K and m^{test, *} that is calculated in formula (3) can make a score s more robust.

A specific feature of a specific type is extracted and compared with the knowledge in the CPM, and an abnormality score of each image block in a test image is determined. In this way, calculation of an overall abnormality score of the test image is completed. To obtain more detailed abnormality distribution, the test image is segmented into different image blocks, and a score of each image block is calculated in the foregoing manner. However, in this case, only features of the to-be-calculated image blocks are concerned and processed.

In this manner, an abnormality score of each image block in the test image can be obtained. To obtain a continuous and more intuitive abnormality distribution diagram, scores of these discrete image blocks are further processed by using Gaussian smoothing. The Gaussian smoothing can ensure that the abnormality scores can form a continuous and gradient distribution in an image space, thereby generating a final abnormality score map. The abnormality score map not only can clearly display which regions in the image are abnormal, but also can reflect abnormality severity through gradient of the score, thereby providing an intuitive and powerful tool for subsequent abnormality processing and analysis.

The abnormality recognition method provided in an embodiment of the present disclosure exhibits a high degree of flexibility. Specifically, a final algorithm configured for calculating the abnormality score map is not limited to the Gaussian smoothing mentioned above, and may be replaced with another suitable algorithm based on an actual requirement or an application scenario. Such flexibility ensures that the method can adapt to different data distribution and abnormality types, thereby improving practicability and accuracy thereof.

In addition to the flexibility of a calculation algorithm of the abnormality score map, a training process in an embodiment also allows adjustment. For example, a contrastive learning loss function may be modified or replaced based on a specific requirement, to adapt to different training targets and data characteristics. Similarly, a contrastive learning manner during training may also be adjusted based on a requirement, which makes it possible to further optimize model performance.

In addition, the prompt is used in an embodiment to enhance a capability of a model in extracting corresponding type information, without the need to change a structure of a backbone network. Such a policy effectively improves a representation capability and accuracy of a model. However, this embodiment also provides an alternative solution: adding an adaptation module after the backbone network. Such an adaptation module can achieve an effect similar to the prompt, to be specific, enhancing sensitivity of the model to specific information through fine adjustment or extension of a network structure. Such flexibility ensures that performance optimization can be performed on the model without changing a core structure of the model, thereby reducing complexity and costs of model adjustment.

In a specific implementation of the present disclosure, related data such as user information is involved. When the foregoing embodiments of the present disclosure are applied to a specific product or technology, user permission or consent needs to be obtained, and collection, use, and processing of the related data needs to comply with related laws and regulations and standards of related countries and regions.

For brief description, the foregoing method embodiments are represented as a series of action combinations. However, a person skilled in the art needs to appreciate that the present disclosure is not limited to the described order of the actions, because according to the present disclosure, some steps may be performed in other orders or simultaneously. In addition, a person skilled in the art also needs to know that all the embodiments described in the specification are exemplary embodiments, and the related actions and modules are not necessarily mandatory to the present disclosure.

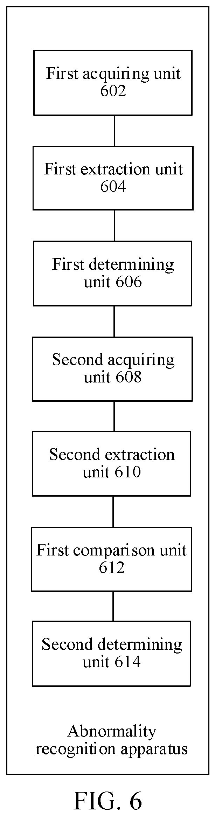

According to another aspect of embodiments of the present disclosure, an abnormality recognition apparatus configured to implement the foregoing abnormality recognition method is further provided. As shown in FIG. 6, the apparatus includes:
a first acquiring unit 602, configured to acquire a first image to be recognized, the first image being an image obtained by performing collection on an object entity;
a first extraction unit 604, configured to perform first-stage feature extraction on the first image to obtain at least one basic visual feature, the basic visual feature being configured for representing a visual attribute presented on an object surface, and the object surface including a surface of the object entity;
a first determining unit 606, configured to determine, from at least one standard visual feature, a first visual feature having a feature similarity to the basic visual feature that is greater than or equal to a preset threshold, the standard visual feature being a feature obtained by performing feature extraction on a plurality of sample images belonging to a plurality of object types, and a sample image corresponding to the first visual feature being a second image belonging to a target object type;
a second acquiring unit 608, configured to acquire target guidance information matching the first visual feature, the target guidance information being configured for guiding attention to a feature in an image that is related to the target object type;
a second extraction unit 610, configured to perform second-stage feature extraction on the first image by using the target guidance information, to obtain at least one second visual feature related to the target object type;
a first comparison unit 612, configured to compare the at least one second visual feature with a standard visual feature of the second image to obtain a comparison result; and
a second determining unit 614, configured to determine an abnormality recognition result of the first image based on the comparison result.

For a specific embodiment, refer to the examples shown in the foregoing abnormality recognition method, and details are not described in this example again.

In an embodiment, the apparatus further includes:
a segmentation unit, configured to perform region segmentation on the second image before target guidance information matching the target object type is acquired, to obtain a first region and a second region, a feature similarity between each second visual feature in the first region or the second region being greater than or equal to a first threshold;
a third extraction unit, configured to guide, by using initial guidance information, a process of performing the second-stage feature extraction on an image belonging to the target object type before the target guidance information matching the target object type is acquired, to extract a first sample feature and a second sample feature, the first sample feature being a feature having a first feature attribute, the second sample feature being a feature having a second feature attribute, the first feature attribute being a feature attribute in the first region, and the second feature attribute being a feature attribute in the second region;
a second comparison unit, configured to compare the first sample feature with a second visual feature in the first region before the target guidance information matching the target object type is acquired, to obtain a first result, and compare the second sample feature with a second visual feature in the second region, to obtain a second result; and
a third determining unit, configured to adjust the initial guidance information based on the first result and the second result before the target guidance information matching the target object type is acquired, to obtain the target guidance information.

For a specific embodiment, refer to the examples shown in the foregoing abnormality recognition method, and details are not described in this example again.

In an embodiment, when the at least one second visual feature is a plurality of second visual features, the first comparison unit 612 includes:
a first acquiring module, configured to acquire first distances respectively between the plurality of second visual features and the standard visual feature of the second image in a feature space, the distances in the feature space being in an inverse relationship with a similarity between the features;
a first determining module, configured to determine, from the plurality of second visual features, a first feature with a longest first distance and a second feature with a shortest first distance;
a second acquiring module, configured to acquire a second distance between the first feature and the second feature in the feature space; and
a third acquiring module, configured to acquire the comparison result based on the second distance.

For a specific embodiment, refer to the examples shown in the foregoing abnormality recognition method, and details are not described in this example again.

In an embodiment, the third acquiring module includes:
a calculation submodule, configured to calculate a third distance between a third feature and the first feature in the feature space, the third feature being a second visual feature adjacent to the second feature in the feature space; and
an optimization submodule, configured to perform robust optimization on the second distance by using the third distance, to obtain a target distance, the comparison result including the target distance.

The second determining unit 614 includes:
a second determining module, configured to determine, when the target distance is greater than or equal to a preset distance threshold, that the abnormality recognition result is that the first image is in an abnormal state; and
a third determining module, configured to determine, when the target distance is less than the preset distance threshold, that the abnormality recognition result is that the first image is in a normal state.

For a specific embodiment, refer to the examples shown in the foregoing abnormality recognition method, and details are not described in this example again.

In an embodiment, when the at least one basic visual feature is a first quantity of basic visual features, the first extraction unit 604 includes:
a first segmentation module, configured to segment the first image into a first quantity of image blocks, the image blocks being configured for representing local image regions of the first image; and
a first extraction module, configured to perform the first-stage feature extraction on the first quantity of image blocks to obtain a first image feature corresponding to each image block as the basic visual feature; and
when the at least one second visual feature is a second quantity of second visual features, the second extraction unit 610 includes:
   a second segmentation module, configured to segment the first image into a second quantity of image blocks, the image blocks being configured for representing the local image regions of the first image; and
   a second extraction module, configured to perform the second-stage feature extraction on the second quantity of image blocks to obtain a second image feature corresponding to each image block as the second visual feature.

For a specific embodiment, refer to the examples shown in the foregoing abnormality recognition method, and details are not described in this example again.

In an embodiment, the apparatus further includes:
after the second-stage feature extraction is performed on the second quantity of image blocks to obtain the second image feature corresponding to each image block, an execution module, configured to perform the following operations until it is obtained that a quantity of key image features stored based on the target object type is greater than or equal to a quantity threshold:
determining a current image feature from the second image feature corresponding to each image block;
calculating a fourth distance between an image feature other than the current image feature in the second image feature corresponding to each image block and the current image feature in the feature space, the distance in the feature space being in an inverse relationship with a similarity between the features;
determining a second image feature with a largest fourth distance as the key image feature;
storing the obtained key image features based on the target object type when a quantity of the obtained key image features is greater than or equal to the quantity threshold; or
determining a next image feature from the second image feature corresponding to each image block when the quantity of the obtained key image features is less than the quantity threshold, and using the next image feature as the current image feature.

For a specific embodiment, reference may be made to the examples shown in the foregoing abnormality recognition method, and details are not described in this example again.

In an embodiment, the apparatus further includes:
a setting unit, configured to set, after the first-stage feature extraction is performed on the first image to obtain the at least one basic visual feature, an object type to which the object entity belongs as an additional object type when a feature similarity between each of the at least one standard visual feature and the basic visual feature is less than the preset threshold, the additional object type being a type other than a rated object type to which the plurality of sample images belongs; and
a collection unit, configured to perform collection on a standard object entity of the additional object type after the first-stage feature extraction is performed on the first image to obtain the at least one basic visual feature, to obtain a plurality of third images, and use the third images as the sample images.

For a specific embodiment, reference may be made to the examples shown in the foregoing abnormality recognition method, and details are not described in this example again.

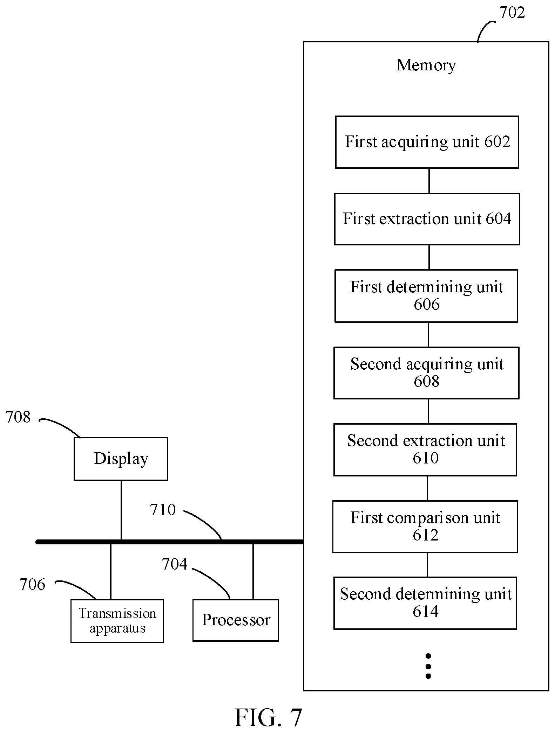

According to still another aspect of embodiments of the present disclosure, an electronic device configured to implement the foregoing abnormality recognition method is further provided. The electronic device may be, but is not limited to, the user equipment 102 or the server 112 shown in FIG. 1. This embodiment is described through an example in which the electronic device is the user equipment 102. Further, as shown in FIG. 7, the electronic device includes a memory 702 and a processor 704. The memory 702 stores a computer program. The processor 704 is configured to perform operations in any one of the foregoing method embodiments by using the computer program.

In an embodiment, the electronic device may be located in at least one of a plurality of network devices in a computer network.

In an embodiment, the processor may be configured to perform the following operations by using the computer program:
S1: Acquire a first image to be recognized, the first image being an image obtained by performing collection on an object entity.
S2: Perform first-stage feature extraction on the first image to obtain at least one basic visual feature, the basic visual feature being configured for representing a visual attribute presented on an object surface, and the object surface including a surface of the object entity.
S3: Determine, from at least one standard visual feature, a first visual feature having a feature similarity to the basic visual feature that is greater than or equal to a preset threshold, the standard visual feature being a feature obtained by performing feature extraction on a plurality of sample images belonging to a plurality of object types, and a sample image corresponding to the first visual feature being a second image belonging to a target object type.
S4: Acquire target guidance information matching the first visual feature, the target guidance information being configured for guiding attention to a feature in an image that is related to the target object type.
S5: Perform second-stage feature extraction on the first image by using the target guidance information, to obtain at least one second visual feature related to the target object type.
S6: Compare the at least one second visual feature with a standard visual feature of the second image to obtain a comparison result.
S7: Determine an abnormality recognition result of the first image based on the comparison result.

In one embodiment, a person of ordinary skill in the art may understand that the structure shown in FIG. 7 is only illustrative, and FIG. 7 does not constitute a limitation to the structure of the electronic device. For example, the electronic device may further include more or less components (for example, a network interface) than those shown in FIG. 7, or has a configuration different from that shown in FIG. 7.

The memory 702 may be configured to store a software program and a module, for example, a program instruction/module corresponding to the abnormality recognition method and apparatus in embodiments of the present disclosure, and the processor 704 runs the software program and the module stored in the memory 702, to perform various function applications and data processing, that is, implement the foregoing abnormality recognition method. The memory 702 may include a high-speed random-access memory, and may further include a non-volatile memory, for example, one or more magnetic storage apparatuses, a flash memory, or another non-volatile solid-state memory. In some instances, the memory 702 may further include memories remotely disposed relative to the processor 704, and these remote memories may be connected to the electronic device through a network. Examples of the network include but are not limited to, the Internet, an intranet, a local area network, a mobile communication network, and a combination thereof. The memory 702 may be specifically configured to store information such as the first image, the second image, and the abnormality recognition result, but this is not limited thereto. As an example, as shown in FIG. 7, the memory 702 may include, but is not limited to, the first acquiring unit 602, the first extraction unit 604, the first determining unit 606, the second acquiring unit 608, the second extraction unit 610, the first comparison unit 612, and the second determining unit 614 in the foregoing abnormality recognition apparatus. In addition, the memory 702 may further include, but is not limited to, other module units in the foregoing abnormality recognition apparatus. Details are not described in this example again.

In one embodiment, a transmission apparatus 706 is configured to receive or transmit data through a network. Specific examples of the foregoing network include a wired network and a wireless network. In an example, the transmission apparatus 706 includes a network interface controller (NIC), which may be connected to another network device and router through a network cable, to communicate with the Internet or a local area network. In an example, the transmission apparatus 706 is a radio frequency (RF) module, which is configured to communicate with the Internet in a wireless manner.

In addition, the electronic device further includes: a display 708, configured to display the information such as the first image, the second image, and the abnormality recognition result; and a connection bus 710, configured to connect various module components in the foregoing electronic device.

In another embodiment, the user equipment or the server may be a node in a distributed system. The distributed system may be a blockchain system, and the blockchain system may be a distributed system formed by connecting a plurality of nodes in a network communication form. The nodes may form a peer-to-peer network. Any form of computing device, for example, the electronic device such as the server or the user equipment, can become a node in the blockchain system by joining the peer-to-peer network.

According to an aspect of the present disclosure, a computer program product is provided. The computer program product includes a computer program/instruction, and the computer program/instruction includes program code configured for performing a method shown in the flowchart. In such an embodiment, by using a communication part, the computer program may be downloaded and installed from a network, and/or installed from a removable medium. The computer program, when executed by a central processing unit, executes various functions provided in embodiments of the present disclosure.

The sequence numbers of the foregoing embodiments of the present disclosure are merely for description purpose and do not indicate the preference of the embodiments.

A computer system of an electronic device is merely an example, and does not constitute any limitation to functions and use ranges of embodiments of the present disclosure.

The computer system includes a central processing unit (CPU), which may perform various suitable actions and processing based on a program stored in a read-only memory (ROM) or a program loaded from a storage part into a random-access memory (RAM). The random-access memory further stores various programs and data required for system operations. The CPU, the ROM, and the RAM are connected to each other through a bus. An input/output interface (I/O interface) is also connected to the bus.

The following components are connected to the I/O interface: input parts including a keyboard, a mouse, and the like, output parts including a cathode ray tube (CRT), a liquid crystal display (LCD), a speaker, and the like, storage parts including a hard disk and the like, and a communication part including a network interface card such as a local area network card or a modem. The communication part performs communication processing by using a network such as the Internet. A driver is also connected to the I/O interface as required. The removable medium such as a magnetic disk, an optical disc, a magneto-optical disk, or a semiconductor memory is mounted on the driver as required, so that a computer program read from the removable medium is installed into the storage part as required.

Particularly, according to embodiments of the present disclosure, the processes described in various method flowcharts may be implemented as computer software programs. For example, this embodiment of the present disclosure includes a computer program product. The computer program product includes a computer program carried on a computer-readable medium, and the computer program includes the program code configured for performing the method shown in the flowchart. In such an embodiment, by using the communication part, the computer program may be downloaded and installed from the network, and/or installed from the removable medium. The computer program, when executed by the central processing unit, executes various functions defined in the system of the present disclosure.

According to an aspect of the present disclosure, a computer-readable storage medium is provided. A processor of a computer device reads a computer program from the computer-readable storage medium, and the processor executes the computer program, so that the computer device performs the methods provided in the foregoing various implementations.

In an embodiment, the computer-readable storage medium may be configured to store a computer program configured for performing the following operations:
S1: Acquire a first image to be recognized, the first image being an image obtained by performing collection on an object entity.
S2: Perform first-stage feature extraction on the first image to obtain at least one basic visual feature, the basic visual feature being configured for representing a visual attribute presented on an object surface, and the object surface including a surface of the object entity.
S3: Determine, from at least one standard visual feature, a first visual feature having a feature similarity to the basic visual feature that is greater than or equal to a preset threshold, the standard visual feature being a feature obtained by performing feature extraction on a plurality of sample images belonging to a plurality of object types, and a sample image corresponding to the first visual feature being a second image belonging to a target object type.
S4: Acquire target guidance information matching the first visual feature, the target guidance information being configured for guiding attention to a feature in an image that is related to the target object type.
S5: Perform second-stage feature extraction on the first image by using the target guidance information, to obtain at least one second visual feature related to the target object type.
S6: Compare the at least one second visual feature with a standard visual feature of the second image to obtain a comparison result.
S7: Determine an abnormality recognition result of the first image based on the comparison result.

In embodiments of the present disclosure, the term "module" or "unit" refers to a computer program or a part of the computer program that has a predetermined function, which works together with other relevant parts to achieve a predetermined objective, and may be wholly or partially implemented by using software, hardware (such as a processing circuit or a memory), or a combination thereof. Similarly, one processor (or a plurality of processors or memories) can be configured to implement one or more modules or units. In addition, each module or unit may be a part of an overall module or unit including a function of the module or unit.

In an embodiment, a person of ordinary skill in the art may understand that all or a part of the operations of the methods in the foregoing embodiments may be implemented by a program instructing relevant hardware of an electronic device. The program may be stored in a computer-readable storage medium. The storage medium may include a flash disk, a read-only memory (ROM), a random-access memory (RAM), a magnetic disk, a compact disc, or the like.

The sequence numbers of the foregoing embodiments of the present disclosure are merely for description purpose and do not indicate the preference of the embodiments.

When the integrated unit in the foregoing embodiments is implemented in the form of a software functional unit and sold or used as an independent product, the integrated unit may be stored in the foregoing computer-readable storage medium. Based on such an understanding, the technical solutions of the present disclosure essentially, or the part contributing to the related art, or all or some of the technical solutions may be implemented in a form of a software product. The computer software product is stored in a storage medium and includes several instructions for instructing one or more computer devices (which may be a personal computer, a server, a network device, or the like) to perform all or some of the operations of the methods described in embodiments of the present disclosure.

In the foregoing embodiments of the present disclosure, the description of each embodiment has respective focuses. For a part that is not described in detail in an embodiment, refer to related descriptions in other embodiments.

In the several embodiments provided in the present disclosure, the disclosed user equipment may be implemented in another manner. The described apparatus embodiment is merely exemplary. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the units or modules may be implemented in electronic, mechanical, or other forms.

The units described as separate components may or may not be physically separate, and components displayed as units may or may not be physical units, may be located in one position, or may be distributed on a plurality of network units. A part of or all of the units may be selected according to actual needs to achieve the objectives of the solutions of the embodiments.

In addition, functional units in the embodiments of the present application may be integrated into one processing unit, or each of the units may exist alone physically, or two or more units are integrated into one unit. The integrated unit may be implemented in a form of hardware, or may be implemented in a form of a software function unit.

The foregoing descriptions are merely exemplary implementations of the present disclosure, and a person of ordinary skill in the art may further make several improvements and modifications without departing from the principle of the present disclosure. These improvements and modifications also need to be considered as the protection scope of the present disclosure.

## Claims

1. An abnormality recognition method, the method being executable by an electronic device, and the method comprising:
acquiring a first image of an object;
performing first-stage feature extraction on the first image to obtain at least one basic visual feature representing a visual attribute of an object surface;
determining a target object type based on a feature similarity between the at least one basic visual feature and at least one first standard visual feature of a plurality of object types;
acquiring target guidance information matching the target object type and for guiding a feature extraction process to focus on a feature related to the target object type;
performing second-stage feature extraction on the first image based on the target guidance information, to obtain at least one second visual feature related to the target object type;
comparing the at least one second visual feature with a second standard visual feature of a sample image of the target object type to obtain a comparison result; and
determining an abnormality recognition result of the first image based on the comparison result.

2. The method according to claim 1, wherein before the acquiring target guidance information matching the target object type, the method further comprises:
performing region segmentation on the sample image of the target object type to obtain a first region and a second region, a feature similarity in the first region or the second region being greater than or equal to a first threshold;
performing the second-stage feature extraction on the sample image based on the initial guidance information, to obtain a first sample feature and a second sample feature, the first sample feature having a first feature attribute, and the second sample feature having a second feature attribute;
comparing the first sample feature with a second visual feature in the first region to obtain a first result, and comparing the second sample feature with a second visual feature in the second region to obtain a second result; and
determining the initial guidance information based on the first result and the second result.

3. The method according to claim 1, wherein when the at least one second visual feature is a plurality of second visual features, the comparing the at least one second visual feature with a second standard visual feature of a sample image of the target object type to obtain a comparison result comprises:
acquiring first distances respectively between the plurality of second visual features and a second standard visual feature of a sample image of the target object type in a feature space, the distances in the feature space being in an inverse relationship with a similarity between the features;
determining, from the plurality of second visual features, a first feature with a longest first distance and a second feature with a shortest first distance;
acquiring a second distance between the first feature and the second feature in the feature space; and
acquiring the comparison result based on the second distance.

4. The method according to claim 3,
wherein the acquiring the comparison result based on the second distance comprises:
determining a third distance between a third feature and the first feature in the feature space, the third feature being adjacent to the second feature in the feature space; and
performing robust optimization on the second distance based on the third distance to obtain a target distance, the comparison result comprising the target distance; and
wherein the determining an abnormality recognition result of the first image based on the comparison result comprises:
determining, when the target distance is greater than or equal to a preset distance threshold, the first image to be in an abnormal state; or
determining, when the target distance is less than the preset distance threshold, the first image to be in a normal state.

5. The method according to claim 1,
wherein when the at least one basic visual feature is a first quantity of basic visual features, the performing first-stage feature extraction on the first image to obtain at least one basic visual feature comprises:
segmenting the first image into a first quantity of image blocks, the image blocks representing local image regions of the first image; and
performing the first-stage feature extraction on the first quantity of image blocks to obtain a first image feature corresponding to each image block as the basic visual feature; and
wherein when the at least one second visual feature is a second quantity of second visual features, the performing second-stage feature extraction on the first image based on the target guidance information, to obtain at least one second visual feature related to the target object type comprises:
segmenting the first image into a second quantity of image blocks, the image blocks representing local image regions of the first image; and
performing the second-stage feature extraction on the second quantity of image blocks based on the target guidance information, to obtain a second image feature corresponding to each image block as the second visual feature.

6. The method according to claim 5, wherein after the performing the second-stage feature extraction on the second quantity of image blocks, to obtain a second image feature corresponding to each image block as the second visual feature, the method further comprises:
performing the following operations until a quantity of key image features stored for the target object type is greater than or equal to a quantity threshold, the key image features for updating a second standard visual feature of the target object type:
determining a current image feature from the second image features corresponding to the image blocks;
calculating a fourth distance between the current image feature and an image feature other than the current image in the second image features in a feature space, the distance in the feature space being in an inverse relationship with a similarity between the features;
determining a second image feature with a largest fourth distance as the key image feature;
storing the obtained key image feature for the target object type; and
determining a next image feature from the second image features when a quantity of obtained key image features is less than the quantity threshold, and determining the next image feature as the current image feature.

7. The method according to claims 1 to 6, wherein after the performing first-stage feature extraction on the first image to obtain at least one basic visual feature, the method further comprises:
setting an object type of the object as an additional object type when a feature similarity between each of the at least one first standard visual feature and the basic visual feature is less than the preset threshold, the additional object type being other than the plurality of object types; and
obtaining a plurality of images of a standard object of the additional object type as sample images of the additional object type.

8. An abnormality recognition apparatus, comprising:
a first acquiring unit, configured to acquire a first image of an object;
a first extraction unit, configured to perform first-stage feature extraction on the first image to obtain at least one basic visual feature representing a visual attribute of an object surface;
a first determining unit, configured to determine a target object type based on a feature similarity between the at least one basic visual feature and at least one first standard visual feature of a plurality of object types;
a second acquiring unit, configured to acquire target guidance information matching the target object type and for guiding a feature extraction process to focus on a feature related to the target object type;
a second extraction unit, configured to perform second-stage feature extraction on the first image based on the target guidance information, to obtain at least one second visual feature related to the target object type;
a first comparison unit, configured to compare the at least one second visual feature with a second standard visual feature of a sample image of the target object type to obtain a comparison result; and
a second determining unit, configured to determine an abnormality recognition result of the first image based on the comparison result.

9. A computer-readable storage medium, wherein the computer-readable storage medium comprises a stored computer program, the computer program performing the method according to any one of claims 1 to 7 when run by an electronic device.

10. A computer program product, comprising a computer program, the computer program, when executed by a processor, implementing operations in the method according to any one of claims 1 to 7.

11. An electronic device, comprising a memory and a processor, the memory storing a computer program, and the processor being configured to perform the method according to any one of claims 1 to 7 by using the computer program.
